# EUROPEAN PATENT SPECIFICATION

(11) **EP 0 537 902 B1**
(45) Date of publication and mention of the grant of the patent: **11.06.1997**
(21) Application number: 92308393.5
(22) Date of filing: 15.09.1992
(51) Int. Cl.: C08G 18/10, C08G 18/50, C08G 18/32

(54) **Polyurea elastomers made using polyamine/carbonyl adducts as chain extenders**
Auf Polyamin/Karbonyl Addukten als Kettenverlängerer basierenden Polyharnstoffelastomeren
Elastomères de polyurée préparés à partir de produits d'addition de polyamine/carbonyle comme agents d'allongement de chaîne

(30) Priority: 16.10.1991 US 777847
(43) Date of publication of application: 21.04.1993
(73) Proprietor: Huntsman Petrochemical Corporation, Salt Lake City, Utah 84108 (US)
(72) Inventor: Zimmerman, Robert LeRoy, Austin, Texas 78759 (US); Primeaux, Dudley Joseph, Elgin, Texas 78621 (US)
(74) Representative: Goddar, Heinz J., Dr.

(56) References cited:
- EP-A- 0 284 912
- EP-A- 0 392 710
- EP-A- 0 416 819
- EP-A- 0 438 696
- EP-A- 0 441 488

## Description

This invention concerns polyurea elastomers, useful in solventless spray coatings, and more particularly polyurea elastomers made using polyamine/carbonyl adduct as chain extenders.

Polyurea elastomers have found widespread utility, including as coatings, such as in spray applications. These materials have a desirable balance of properties including: light stability; fast cure; relative water insensitivity; the ability to be used as solventless systems; excellent physical properties, including tensile strength, elongation and abrasion resistance; pigmentation capability; ease of application, such as using commercially available spray application equipment; and, since no catalyst is needed, consistent reactivity and long term storage stability. These and other well know properties are discussed in the literature, such as by D.J. Primeaux II, in "Spray Polyurea, Versatile High Performance Elastomer for the Polyurethane Industry", Proceedings of the SPI 32nd Annual technical/marketing Conference, pages 126-130, October 1989; and by D.J. Primeaux II, in "Sprayed Polyurea Elastomers Offer Superior performance", UTECH'90, pages 189-194, April 1990.

Polyureas can be made by reacting amines with isocyanates. For example, US-A-4732919 discloses polyurea elastomers made from a high molecular weight polyol or polyoxyalkylene polyamine, a chain extender and a quasi-prepolymer of a polyoxyalkylene polyamine and aromatic isocyanate.

European Patent Application Nos EP-A-0 284 912, EP--A-0 392 710 and EP-A-0 438 696 describe the preparation of polyurea elastomers by reacting polyisocyanate with a combination of polyoxyalkylene polyamine and polyoxyalkylene polyamine/carbonyl compound adduct. The resulting compositions are used for moulded parts.

Polyurea spray formulations based on aliphatic isocyanates and chain extenders are disclosed in EP-A-0 416 819 and in a publication by Texaco Chemical Company entitled "Technical Bulletin, Polyurea Spray Formulations based on Aliphatic Isocyanates and Chain Extenders", 1990. An aliphatic polyurea elastomer, useful in instrument panels, made from an aliphatic isocyanate, amine-terminated polyoxyalkylene polyol and amine-terminated aliphatic chain extender is disclosed in EP-A-0 441 488.

Some polyurea elastomers, including those listed above, can have undesirable curing properties, such as residual tackiness, limiting their utility. There is therefore a need for polyurea elastomers which have improved cure properties.

The present invention provides a method of producing a polyurea spray elastomer by reacting an (A) component comprising a polyisocyanate with a (B) component comprising a polyoxyalkylene polyamine and a polyamine adduct made by reacting a low molecular weight polyoxyalkylene polyamine with a carbonyl compound,
characterised in that:
(a) said polyoxyalkylene polyamine used in the (B) component has the formula: 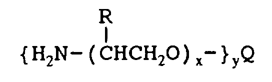 wherein:
   Q is the polyvalent residue of an active hydrogen-containing compound;
   each R is independently hydrogen or alkyl;
   x is at least 1, and
   y is at least 2
   provided that the average value for x is less than 10 for the low molecular weight polyoxyalkylene amine used to form the adduct;
(b) said polyisocyanate in component (A) is used in an amount such that there is a stoichiometric excess of polyisocyanate relative to polyoxyalkylene polyamine in component (B), excluding polyamine adduct;
(c) the relative amount of polyisocyanate to polyoxyalkylene polyamine plus polyamine adduct is from 0.75 to 1.5 in molar proportions, and
(d) said polyamine adduct is present in the proportions 0.5 to 60 % by weight of adduct, based on the total amount of amine.

Preferably, the carbonyl compound has the formula: 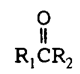 wherein R₁ and R₂ are independently hydrogen or hydrocarbyl, or can be linked to form a cycloalkanone. For instance, R₁ and R₂ can both be hydrogen.

It has been discovered that the resulting polyurea elastomers possess improved cure and other properties.

The polyisocyanate starting material may be any compound, or mixtures thereof, having two or more isocyanate groups bonded to an organic radical. The polyisocyanate may be a monomeric polyisocyanate or, preferably, the reaction product of a monomeric polyisocyanate with a polyoxyalkylene polyamine, such as a polyurea polyisocyanate quasi-prepolymer. The term "quasi-prepolymer" means a mixture of monomers and oligomers, essentially dimers, made using a stoichiometric excess of one type of monomer, in this case polyisocyanate, over the other monomer, i.e. polyamine.

Polyisocyanates include compounds shown by Formula 1.

R(-NCO)_{z} (1)

In Formula 1, R is an organic radical having a valance z and can be: a straight or branch chain, acyclic, cyclic or heterocyclic, saturated, unsaturated, or aromatic, unsubstituted or halo-substituted hydrocarbylene having at least 1, preferably from 6 to 25, and most preferably from 6 to 12 carbon atoms. The number of isocyanate groups, defined by z, is at least 2, preferably from 2 to 4, and is most preferably 2. Typical polyisocyanates include, among others, one or more of the following: alkylene polyisocyanates with 4 to 12 carbon atoms in the alkylene radical, such as 1,12 dodecane diisocyanate, 1,4-tetramethylene diisocyanate and 1,6-hexamethylene diisocyanate; cycloaliphatic diisocyanates such as 1,3-and 1,4-cyclohexane diisocyanate, 1-isocyanato-3,3,5-trimethyl-5-isocyanatomethylcyclohexane (isophorone diisocyanate), and 4,4'-, 2,2'- or 2,4'-dicyclohexylmethane diisocyanate; aromatic polyisocyanates, such as p-phenylene diisocyanate, polymethylene polyphenyl isocyanates, 2,4-/2,6-toluene diisocyanate (TDI), dianisidine diisocyanate, bitolylene diisocyanate, naphthalene-1,4-diisocyanate, bis(4-isocyanatophenyl)methane, bis(3-methyl-3-isocyanatophenyl)methane, bis(3-methyl-4-isocyanatophenyl)methane, 4-4'-diphenylpropane diisocyanate, and methylene-bridged polyphenol polyisocyanate mixtures, such as those containing methylene diphenyldiisocyanate isomers like methylene bis(4-phenylisocyanate) (MDI); alkaryl and aralkyl diisocyanates, such as tetraalkylxylene diisocyanates like tetramethylxylene diisocyanate; trimerized or biuretic polyisocyanates, and other isocyanates, such as described in US-A-2683730, US-A-2950263, US-A-3012008, US-A-3344162, US-A-3362979 and US-A-3394164. Preferred polyisocyanates include tetramethylxylene diisocyanate, isophorone diisocyanate, hexamethylene diisocyanate, and cyclohexane diisocyanate.

The polyoxyalkylene polyamine, such as used either to make the polyisocyanate quasi-prepolymer or as component (B) which reacts with the polyisocyanate, may be any polyoxyalkylene polyamine, including mixtures thereof. The polyoxyalkylene polyamine can be a primary and/or secondary amine-terminated polyether polyol, typically having a weight average molecular weight of more than 100, and preferably from 200 to 5,000, a functionality of from 2 to 6, and preferably from 2 to 3; and an amine equivalent weight of 750 to 4,000.

Polyoxyalkylene polyamines include compounds shown in Formula 2. 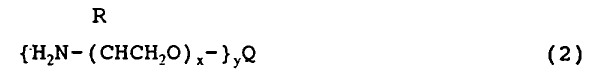 The variables in Formula 2 having the following meanings. Q is the polyvalent residue of an active hydrogen-containing compound used as an initiator. The valence of Q is given by y, where y is at least 2, preferably from 2 to 8, and most preferably 2 to 3. Each R is independently hydrogen or alkyl, such as methyl or ethyl. The R groups are preferably hydrogen and/or methyl, including mixtures. The average- number of oxyalkylene repeating units per amine group, given by x, is at least 1, preferably from 1 to 100, and most preferably from 1.5 to 7.

Typical initiators include, among others, one or more of the following: polyhydroxy compounds, including diols such as ethylene glycol, propylene glycol, 1,2- or 1,4-butanediols, and triols such as trimethylolpropane and glycerol. Preferred initiators include ethylene glycol, propylene glycol, trimethylolpropane, and glycerol. Typical oxyalkylene repeating units include oxyethylene, oxypropylene, oxybutylene, and so on, including mixtures thereof. When two or more oxyalkylenes are used, they may be present in any form, such as randomly or in blocks. Preferred polyoxyalkylene polyamines include JEFFAMINE^{®} polyoxyalkylene amines from Texaco Chemical Co. Inc., such as diamines D-230, D-400, D-2000 and D-4000, and triamines T-403, T-3000 and T-5000.

The relative amount of monomeric polyisocyanate to polyoxyalkylene polyamine, excluding polyamine adduct, is such that there is at least a stoichiometric excess of monomeric polyisocyanate over polyoxyalkylene polyamine. Generally more than 1, preferably from 1.5 to 25, and most preferably from 10 to 25, equivalent moles of isocyanate are used per mole of amine.

Although no additional ingredients, such as solvent or catalyst, are needed or preferred to conduct the reaction, any other suitable materials may be present, if desired.

The reaction between the monomeric polyisocyanate and the polyoxyalkylene polyamine may be conducted under any suitable conditions for effecting reactions between isocyanates and amines. Typically, reactions are conducted under ambient temperature and pressure. Since the reaction precedes rapidly, the ingredients are preferably thoroughly mixed, such as using a high speed mixer.

The low molecular weight polyoxyalkylene polyamine used to make polyamine adduct includes compounds having a structure as shown in Formula 2 above, and with the same meanings for variables Q, R, x and y, provided that x is less than 10, and preferably less than 7.

The carbonyl compound may be any suitable carbonyl compound, including mixtures thereof. The carbonyl compound includes compounds shown in Formula 3. 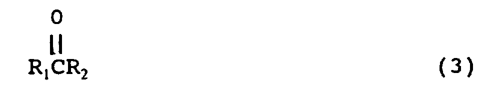 wherein R₁ and R₂ are independently hydrocarbyl, or may be linked together to complete a cycloalkanone, or, preferably, may be hydrogen. Typical hydrocarbyl groups include, among others: alkyl such as methyl, ethyl or propyl, and when R₁ and R₂ are linked to form a cycloalkanone such as cyclopentanone or cyclohexanone. Preferred carbonyl compounds include formaldehyde.

The relative amount of low molecular weight polyoxyalkylene polyamine to carbonyl compound is any amount sufficient to make a polyamine adduct. Typically, the molar ratio of amine to carbonyl compound is from 0.4:1 to 3:1, preferably from 0.5:1 to 3:1, and most preferably from 1:1 to 2:1.

Although no additional ingredients, such as solvent or catalyst, are needed or preferred to conduct the adduct-forming reaction, any other suitable materials may be present, if desired.

The reaction between the low molecular weight polyoxyalkylene polyamine and the carbonyl compound may be conducted under any suitable conditions for effecting reactions between amines and carbonyl compounds. Typically, reactions are conducted under ambient temperature and pressure, and preferably under a nitrogen atmosphere. Typically, the temperature during the reaction may be from 0 to 200°C, preferably from 40 to 150°C, and most preferably from 60 to 90°C. The components are typically combined under a pressure of from 1 KPa to 1 MPa (0.01 to 10 atmospheres), preferably from 1 to 400 KPa (0.01 to 4 atmospheres), and most preferably from 1 to 100 KPa (0.01 to 1 atmospheres).

In a typical embodiment, a reaction vessel equipped with a mechanical stirrer, thermometer, addition funnel is charged under nitrogen atmosphere with the low molecular weight polyoxyalkylene polyamine. Then with stirring, the carbonyl compound is added, and the reaction mixture is heated, typically to about 70°C, and maintained for one-half hour before placing under vacuum, typically of 130 Pa (1mm Hg), and then heating further, typically to 105°C, for a time sufficient to complete the reaction, typically an hour.

The polyamine and carbonyl compound undergo a condensation reaction in which the carbonyl compound acts as a coupling agent to form a polyamine chain with at least 2, preferably from 2 to 3, and most preferably an average of about 2, polyamine monomeric units. The reaction produces secondary amine linkages coupled by unsubstituted or hydrocarbyl-substituted methylene, such that a polyamine adduct contains both secondary amine and primary amine groups, the latter being the unreacted, terminal groups.

The polyamine adduct acts as a chain extender in the reaction between the polyisocyanate and the polyoxyalkylene polyamine. The chain extender reacts with the polyisocyanate, providing hard-segment segregation, resulting in an increased polymer modulus and glass transition temperature as well as thermal stability.

The relative amount of polyisocyanate to polyoxyalkylene polyamine and polyamine adduct is any amount sufficient to make a polyurea elastomer product. Typically from 0.75 to 1.5, preferably from 0.85 to 1.25, and most preferably from 0.9 to 1.1, moles of amine are provided per mole of isocyanate. The relative proportion of polyoxyalkylene polyamine to polyamine adduct is not critical, so long as an effective amount, i.e. an amount sufficient to make polyurea elastomer having improved cure properties, of polyamine adduct is provided. Typically, from 0.5 to 60, preferably from 0.5 to 45, and most preferably from 15 to 40, weight percent of polyamine adduct is provided, based on the total amount of amine.

Other materials may be added, if desired, to the reaction mixture. These optional ingredients include, among others, one or more of the following: other chain extenders, such as aromatic diamines or low molecular weight polyoxyalkylene polyamines; foam stabilizers, such as silicone oil or emulsifier, organic silanes or siloxanes; pigments or colouring agents, such as titanium dioxide; reinforcing materials, such as chopped or milled glass fibres, carbon fibres and/or other mineral fibres; blowing agents; catalysts, such as tertiary amines or organic tin compounds; fillers; surfactants; and any other suitable materials.

The polyisocyanate, polyoxyalkylene polyamine and polyamine adduct, along with any other optional ingredients, are reacted under any suitable conditions. Typically, the temperature during the reaction may be from 0 to 80°C, preferably from 15 to 80°C, and most preferably from 25 to 75°C. The components can be combined under ambient or higher pressures of up to 25 MPa (250 atmospheres), preferably from 3 to 20 MPa (30 to 200 atmospheres), and most preferably from 6 to 14 MPa (60 to 140 atmospheres).

When used in spray applications, the components can be impingement-mixed directly, using high pressure spray equipment, such as a GUSMER® VR-H-2000 proportioner fitted with a GX-7 spray gun. The components are typically applied at a rate of at least 0.2, and preferably from 0.5 to 15, and most preferably at 9 to 10, Kg per minute.

It has been discovered that a polyurea elastomer made using a polyamine adduct has no residual surface tackiness, and possesses an extremely smooth surface. In addition to improved appearance and handling capabilities, the superior surface properties enhance subsequent surface treatment performance.

All percentages given in the disclosure and claims are in weight percent, unless otherwise stated.

### EXAMPLES

Terms used in the examples have the following meanings.

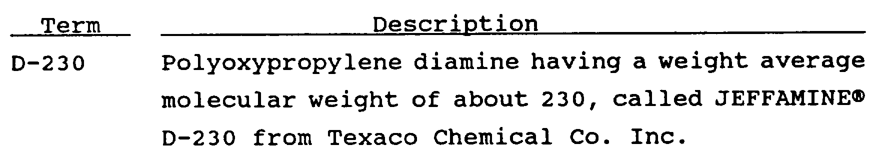

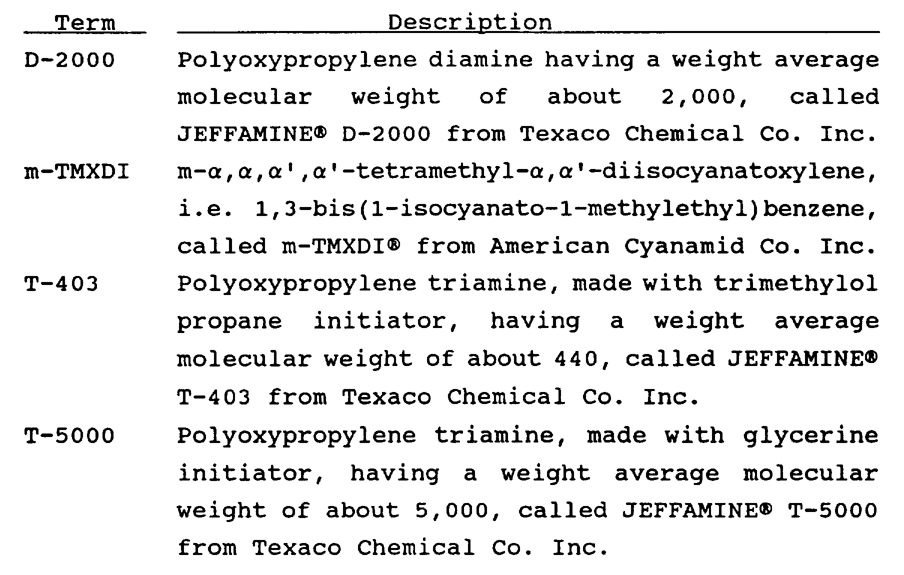

Unless otherwise indicated, test results given in the examples use the following procedures:

Elongation: determined by standard ASTM D-638 procedure, given in percent.

Modulus: determined by standard ASTM D-638 and D-790 procedure for 100% and 300% tests, given in MPa and psi.

Shore Hardness: determined by standard ASTM D-2240 procedure, given at initial measurement (0 seconds), and after 10 seconds (for D Hardness).

Tear strength: determined by standard ASTM D-624 procedure, given in Newtons per metre (N/m) and pounds per linear inch (pli).

Tensile strength: determined by standard ASTM D-638 procedure, given in MPa and psi.

### Examples 1-2: Polyamine Adduct Preparation

These examples show how to make polyamine adduct. A 5 litre, 3-necked flask equipped with a mechanical stirrer, thermometer, addition funnel, and nitrogen inlet is charged with 3,000 grams of D-230. 457.4 grams of a 55% solution of formaldehyde in methanol is added with stirring. The reaction mixture is heated to 70°C and maintained at that temperature for one-half hour. The reaction is then placed under a vacuum of 133 Pa heated to 105°C and maintained at that temperature for 1 hour. The reaction produces 3,080 grams of polyamine adduct.

In Example 2, the same procedure is followed as in Example 1, except that D-230 is replaced by T-403, and 242.6 grams of a 55% methanol solution of formaldehyde are used, producing 3,049 grams of polyamine adduct.

### Examples 3-7C: Polyurea Elastomers Preparation and Analysis

Examples 3, 5 and 6 show how to make polyurea elastomers using the polyamine adducts made in Examples 1 and 2. Comparison Examples 4C and 7C are similar to Examples 3 and 5, respectively, except that the polyamine adduct is replaced by the corresponding polyoxyalkylene polyamine precursor.

Polyisocyanate quasi-prepolymer is prepared by mixing equal weight parts of m-TMXDI and D-2000 with vigorous agitation under ambient conditions. The reaction takes approximately 15 minutes to complete. The components listed in Table I, i.e. polyisocyanate quasi-prepolymer and a blend of polyoxyalkylene polyamines, with or without polyamine adduct, are spray mixed onto mould-released, steel panels at an isocyanate to amine volume ratio of 1.00, using a plural component, GUSMER® VR-H-2000 proportioner fitted with a GX-7 spray gun, at block and hose temperatures of 65°C and at a rate of 9.1 Kg per minute total mixture. Each component is fed at a line pressure of 6 to 14 MPa (60 to 140 atmospheres). The resulting film cures in a few seconds and is tested using the previously described procedures, with the results shown in Table I.

**TABLE I**

| Example No. | 3 | 4C | 5 | 6 | 7C |
|---|---|---|---|---|---|
| Component (A) | Polyisocyanate Quasi-Prepolymer | | | | |
| Component (B) : | | | | | |
| T-5000 | 32.2 | 32.0 | 32.2 | 30.6 | 32.0 |
| D-2000 | 21.5 | 21.3 | 21.5 | 20.4 | 21.3 |
| T-403 | 26.9 | 26.7 | - | - | 26.7 |
| D-230 | - | 20.0 | 19.5 | 10.8 | 20.0 |
| Polyamine Adduct | 19.5^{a} | - | 26.8^{b} | 38.2^{b} | - |
| Processing:Index | 1.00 | 1.05 | 1.00 | 1.00 | 1.05 |
| A/B Vol. Ratio | 1.00 | 1.00 | 1.00 | 1.00 | 1.00 |
| A/B Wt. Ratio | 1.07 | 1.08 | 1.07 | 1.06 | 1.08 |
| "Gel" time (sec) | 3.0 | 2.0 | 2.0 | 2.0 | 2.0 |
| Tack Free (sec) | 20 | <10 | 15 | 15 | <10 |
| Elastomer Properties: | | | | | |
| Tensile Strength(MPa) | 6.32 | 6.56 | 6.02 | 6.39 | 6.56 |
| Tensile Strength(psi) | 916 | 951 | 873 | 927 | 951 |
| Elongation (%) | 447 | 391 | 375 | 299 | 391 |
| Tear Strength (N/m) | 331 | 410 | 273 | 319 | 410 |
| Tear Strength (pli) | 189 | 234 | 156 | 182 | 234 |
| Shore D Hardness: | | | | | |
| 0 sec | 34 | 40 | 34 | 37 | 40 |
| 10 sec | 18 | 27 | 21 | 26 | 27 |
| Shore A Hardness(0sec) | 78 | 79 | 72 | 73 | 79 |
| 100% Modulus (MPa) | 2.43 | 2.90 | 2.15 | 2.90 | 2.90 |
| 100% Modulus (psi) | 353 | 420 | 312 | 420 | 420 |
| 300% Modulus (MPa) | 4.41 | 4.92 | 4.40 | 5.91 | 4.92 |
| 300% Modulus (psi) | 640 | 713 | 638 | 857 | 713 |

| | | | | | |
|---|---|---|---|---|---|
| a - from Example 1, using D-230 | | | | | |
| b - from Example 2, using T-403 | | | | | |

Polyurea elastomer made in Examples 3, 5 and 6 using polyamine adduct produces films having very smooth surfaces and no residual tackiness. In contrast, polyurea elastomers in Comparison Examples 4C and 7C have rougher surfaces and residual tackiness.

## Claims

1. A method of producing a spray polyurea elastomer by reacting an (A) component comprising a polyisocyanate with a (B) component comprising a polyoxyalkylene polyamine and a polyamine adduct made by reacting a low molecular weight polyoxyalkylene polyamine with a carbonyl compound,
characterised in that:
(a) said polyoxyalkylene polyamine used in the (B) component has the formula: 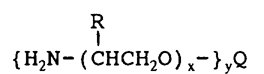 wherein:
Q is the polyvalent residue of an active hydrogen-containing compound;
each R is independently hydrogen or alkyl;
x is at least 1, and
y is at least 2
provided that the average value for x is less than 10 for the low molecular weight polyoxyalkylene amine used to form the adduct;
(b) said polyisocyanate in component (A) is used in an amount such that there is a stoichiometric excess of polyisocyanate relative to polyoxyalkylene polyamine in component (B), excluding polyamine adduct;
(c) the relative amount of polyisocyanate to polyoxyalkylene polyamine plus polyamine adduct is from 0.75 to 1.5 in molar proportions, and
(d) said polyamine adduct is present in the proportions 0.5 to 60 % by weight of adduct, based on the total amount of amine.

2. A method according to claim 1 characterised in that the carbonyl compound has the formula: 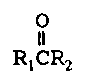 wherein R₁ and R₂ are independently hydrogen or hydrocarbyl, or can be linked to form a cycloalkanone.

3. A method according to claim 2 characterised in that R₁ and R₂ are both hydrogen.

4. A method according to any one of claims 1 to 3 characterised in that the polyisocyanate is a quasi-prepolymer made by reacting a stoichiometric excess of a monomeric polyisocyanate with a polyoxyalkylene polyamine.

5. A method according to claim 4 characterised in that the quasi-prepolymer is obtained by reacting a hydrocarbyl diisocyanate and a polyoxyalkylene polyamine of the formula: 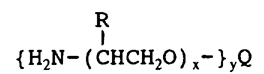 wherein:
Q is the polyvalent residue of an active hydrogen-containing compound;
each R is independently hydrogen or alkyl;
x is at least 1, and
y is at least 2.

6. A method according to claim 5 characterised in that the quasi-prepolymer is obtained by reacting 1,3-bis (1-isocyanato-1-methylethyl)benzene with a polyoxypropylene diamine having an average molecular weight of 200 to 5000; and/or polyoxypropylene triamine having an average molecular weight of 400 to 5000.

7. A method according to any one of claims 1 to 6 characterised in that the (A) and (B) components are impingement mixed and reacted to form the polyurea elastomer.

## Patentansprüche

1. Ein Verfahren zur Herstellung eines Sprühpolyharnstoffelastomers durch Umsetzen einer (A)-Komponente, die ein Polyisocyanat umfaßt, mit einer (B)-Komponente, die ein Polyoxyalkylenpolyamin und ein Polyamin-Addukt umfaßt, hergestellt durch Umsetzen eines Polyoxyalkylenpolyamins mit niedrigem Molekulargewicht mit einer Carbonylverbindung, dadurch gekennzeichnet, daß:
(a) besagtes Polyoxyalkylenpolyamin, das in der (B)-Komponente verwendet wird, die Formel besitzt: 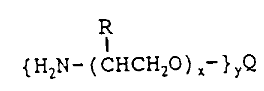 worin:
Q der mehrwertige Rest einer aktiven Wasserstoff enthaltenden Verbindung ist;
jedes R unabhängig Wasserstoff oder Alkyl ist;
x wenigstens 1 ist und
y wenigstens 2 ist,
vorausgesetzt, daß der Mittelwert für x niedriger ist als 10 für das Polyoxyalkylenamin mit niedrigem Molekulargewicht, das verwendet wird, um das Addukt zu bilden;
(b) besagtes Polyisocyanat in Komponente (A) in einer solchen Menge verwendet wird, daß sich ein stöchiometrischer Überschuß von Polyisocyanat relativ zu Polyoxyalkylenpolyamin in Komponente (B), ausschließlich Polyamin-Addukt, ergibt;
(c) die relative Menge von Polyisocyanat zu Polyoxyalkylenpolyamin plus Polyamin-Addukt in molaren Verhältnissen von 0,75 bis 1,5 beträgt, und
(d) besagtes Polyamin-Addukt in den Anteilen 0,5 bis 60 Gew.-% Addukt vorliegt, bezogen auf die Gesamtmenge an Amin.

2. Ein Verfahren nach Anspruch 1, dadurch gekennzeichnet, daß die Carbonylverbindung die Formel besitzt: 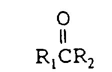 worin R₁ und R₂ unabhängig Wasserstoff oder Kohlenwasserstoff sind oder verknüpft sein können, um ein Cycloalkanon zu bilden.

3. Ein Verfahren nach Anspruch 2, dadurch gekennzeichnet, daß R₁ und R₂ beide Wasserstoff sind.

4. Ein Verfahren nach einem der Ansprüche 1 bis 3, dadurch gekennzeichnet, daß das Polyisocyanat ein Quasi-Präpolymer ist, hergestellt durch Umsetzen eines stöchiometrischen Überschusses eines monomeren Polyisocyanats mit einem Polyoxyalkylenpolyamin.

5. Ein Verfahren nach Anspruch 4, dadurch gekennzeichnet, daß das Quasi-Präpolymer erhalten wird durch Umsetzen eines Kohlenwasserstoffdiisocyanats und eines Polyoxyalkylenpolyamins der Formel: 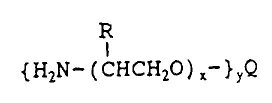 worin:
Q der mehrwertige Rest einer aktiven Wasserstoff enthaltenden Verbindung ist;
jedes R unabhängig Wasserstoff oder Alkyl ist;
x wenigstens 1 ist und
y wenigstens 2 ist.

6. Ein Verfahren nach Anspruch 5, dadurch gekennzeichnet, daß das Quasi-Präpolymer erhalten wird durch Umsetzen von 1,3-Bis(1-isocyanato-1-methylethyl)benzol mit einem Polyoxypropylendiamin mit einem mittleren Molekulargewicht von 200 bis 5000; und/oder Polyoxypropylentriamin mit einem mittleren Molekulargewicht von 400 bis 5000.

7. Ein Verfahren nach einem der Ansprüche 1 bis 6, dadurch gekennzeichnet, daß die (A)- und (B)-Komponenten aufprallvermischt und zur Reaktion gebracht werden, um das Polyharnstoffelastomer zu bilden.

## Revendications

1. Un procédé de production d'un élastomère de polyurée pour pulvérisation par réaction d'un composant (A) comprenant un polyisocyanate avec un composant (B) comprenant une polyoxyalkylène-polyamine et un produit d'addition de polyamine formé en faisant réagir une polyoxyalkylène-polyamine de bas poids moléculaire avec un composé carbonylé, caractérisé en ce que :
(a) ladite polyoxyalkylène-polyamine utilisée dans le composant (B) répond à la formule : 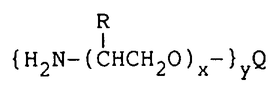 dans laquelle :
Q est le résidu polyvalent d'un composé contenant de l'hydrogène actif ;
chaque R est indépendamment l'hydrogène ou un groupe alkyle ;
x est au moins 1, et
y est au moins 2
à condition que la valeur moyenne de x soit inférieure à 10 pour la polyoxyalkylène-amine de bas poids moléculaire utilisée pour former le produit d'addition ;
(b) ledit polyisocyanate du composant (A) est utilisé en une quantité telle qu'il y ait un excès stoechiométrique de polyisocyanate par rapport à la polyoxyalkylène-polyamine du composant (B), à l'exclusion du produit d'addition de polyamine ;
(c) la quantité relative de polyisocyanate par rapport à la polyoxyalkylène-polyamine plus le produit d'addition de polyamine est de 0,75 à 1,5 en proportions molaires, et
(d) ledit produit d'addition de polyamine est présent en une proportion de 0,5 à 60 % en poids de produit d'addition par rapport à la quantité totale d'amine.

2. Un procédé selon la revendication 1, caractérisé en ce que le composé carbonylé répond à la formule : 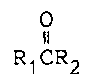 où R₁ et R₂ sont chacun indépendamment l'hydrogène ou un groupe hydrocarbyle, ou peuvent être reliés pour former une cycloalcanone.

3. Un procédé selon la revendication 2, caractérisé en ce que R₁ et R₂ sont tous deux l'hydrogène.

4. Un procédé selon l'une quelconque des revendications 1 à 3, caractérisé en ce que le polyisocyanate est un quasi-prépolymère préparé en faisant réagir un excès stoechiométrique d'un polyisocyanate monomère avec une polyoxyalkylène-polyamine.

5. Un procédé selon la revendication 4, caractérisé en ce que le quasi-prépolymère est obtenu en faisant réagir un diisocyanate d'hydrocarbyle et une polyoxyalkylène-polyamine de la formule : 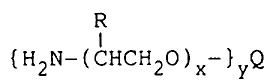 dans laquelle :
Q est le résidu polyvalent d'un composé contenant de l'hydrogène actif ;
chaque R est indépendamment l'hydrogène ou un groupe alkyle ;
x est au moins 1, et
y est au moins 2.

6. Un procédé selon la revendication 5, caractérisé en ce que le quasi-prépolymère est obtenu en faisant réagir le 1,3-bis(1-isocyanato-1-méthyléthyl)benzène avec une polyoxypropylène-diamine ayant un poids moléculaire moyen de 200 à 5000 et/ou une polyoxypropylène-triamine ayant un poids moléculaire moyen de 400 à 5000.

7. Un procédé selon l'une quelconque des revendications 1 à 6, caractérisé en ce que les composants (A) et (B) sont mélangés à l'impact et mis à réagir pour former l'élastomère de polyurée.
